# NOUVEAU FASCICULE DE BREVET EUROPEEN

(11) **EP 1 341 732 B2**
(45) Date de publication et mention de la décision concernant l'opposition: **08.04.2015**
(45) Mention de la délivrance du brevet: 05.12.2007
(21) Numéro de dépôt: 01270195.9
(22) Date de dépôt: 12.12.2001
(51) Int. Cl.: C03C 17/36

(54) **VITRAGE MINI D'UN EMPILEMENT DE COUCHES MINCES POUR LA PROTECTION SOLAIRE ET/OU L'ISOLATION THERMIQUE**
VERGLASUNG MIT DÜNNSCHICHTSTAPEL, MIT EIGENSCHAFTEN FÜR DEN SONNENSCHUTZ UND/ODER ZUR WÄRMEISOLIERUNG
GLAZING PROVIDED WITH A STACK OF THIN LAYERS FOR SOLAR PROTECTION AND/OR HEAT INSULATION

(30) Priorité: 15.12.2000 FR 0016404
(43) Date de publication de la demande: 10.09.2003
(73) Titulaire: SAINT-GOBAIN GLASS FRANCE, 92400 Courbevoie (FR)
(72) Inventeur: COUSTET, Valérie, F-95160 Montmorency (FR); NADAUD, Nicolas, F-94250 Gentilly (FR); BARRIERES, Frédéric, F-78400 Chatou (FR); BROCHOT, Jean-Pierre, F-75014 Paris (FR)
(74) Mandataire: Cardin, Elise
(86) Numéro de dépôt international: PCT/FR2001/003955
(87) Numéro de publication internationale: WO 2002/048065

(56) Documents cités:
- EP-A- 0 722 913
- EP-A2- 0 718 250
- WO-A-95/29883
- WO-A1-97/48649
- WO-A2-01/44131
- FR-A- 2 708 262
- FR-A- 2 766 174
- US-A- 5 837 108

## Description

L'invention concerne les substrats transparents, notamment en matériau rigide minéral comme le verre (ou organique comme un substrat en polymère, rigide ou flexible), lesdits substrats étant revêtus d'un empilement de couches minces comprenant au moins une couche à comportement de type métallique pouvant agir sur le rayonnement solaire et/ou le rayonnement infrarouge de grande longueur d'onde.

L'invention concerne plus particulièrement l'utilisation de tels substrats pour fabriquer des vitrages d'isolation thermique et/ou de protection solaire. Ces vitrages sont destinés aussi bien à équiper les bâtiments que les véhicules, en vue notamment de diminuer l'effort de climatisation et/ou de réduire une surchauffe excessive entraînée par l'importance toujours croissante des surfaces vitrées dans les habitacles.

Un type d'empilement de couches connu pour conférer aux substrats de telles propriétés est constitué d'au moins une couche métallique, comme une couche d'argent, qui se trouve disposée entre deux revêtements en matériau diélectrique du type oxyde métallique. Cet empilement est généralement obtenu par une succession de dépôts effectués par une technique utilisant le vide comme la pulvérisation cathodique éventuellement assistée par champ magnétique. Peuvent aussi être prévues deux couches métalliques très fines de part et d'autre de la couche d'argent, la couche sous-jacente en tant que couche d'accrochage, de nucléation, et la surcouche en tant que couche de protection ou " sacrificielle " afin d'éviter l'altération de l'argent si la couche d'oxyde qui la surmonte est déposée par pulvérisation cathodique en présence d'oxygène.

Il est ainsi connu des brevets européens EP-0 611 213, EP-0 678 484 et EP-0 638 528 des empilements de ce type, à une ou deux couches à base d'argent.

Il est également connu du brevet EP-0 847 965 un empilement à deux couches d'argent conçu de façon à pouvoir subir un traitement thermique du type bombage ou trempe sans évolution optique importante, grâce à l'utilisation de couches barrière à oxygène du type nitrure de silicium et de couches venant stabiliser les couches d'argent.

Il est enfin connu du brevet EP-0 844 219 un empilement à deux couches d'argent -d'épaisseurs très différentes, permettant d'obtenir des vitrages de facteur solaire abaissé à 32% au moins (le facteur solaire FS est le rapport entre l'énergie totale entrant dans le local à travers le vitrage considéré et l'énergie solaire incidente).

De façon générale, mais plus particulièrement dans le domaine des double vitrages pour l'habitat, il est intéressant de pouvoir régler dans une certaine gamme le niveau de transmission lumineuse du vitrage, sans pour autant avoir à reconfigurer complètement l'empilement de couches minces à chaque fois.

Des solutions ont déjà été proposées pour répondre à cet objectif : le brevet FR-2 751 666 propose d'insérer entre le verre et la première couche en diélectrique une couche absorbante à base d'oxyde de fer. Le brevet FR-2 708 262 propose d'insérer une couche absorbante du type nitrure de titane en contact avec et au dessus de la couche d'argent. Ces solutions présentent cependant un inconvénient dans un cas comme dans l'autre, au cas où l'empilement de couches minces subit un traitement thermique du type recuit, bombage ou trempe : la couche absorbante va fortement évoluer optiquement et/ou faire évoluer optiquement l'empilement de couches dans son ensemble.

En effet, si elle se trouve au contact du verre, ou de l'argent, sous l'effet de la chaleur, elle va avoir tendance à s'oxyder, à se détériorer ou à détériorer les couches adjacentes de façon plus ou moins contrôlable. Ainsi, si la couche absorbante est au contact direct avec la couche d'argent, elle tend à la déstabiliser en s'oxydant. Si elle est en contact avec le verre, la couche va se modifier par diffusion des ions alcalins provenant du verre.

L'invention a alors pour but de régler le niveau de transmission lumineuse de vitrages munis des empilements de couches minces décrits plus haut, sans l'inconvénient précité, à savoir sans créer une forte évolution optique des empilements en cas de traitement thermique.

Accessoirement, l'invention a aussi pour but de régler le niveau de transmission lumineuse et/ou la sélectivité du vitrage sans pour autant augmenter trop significativement le niveau de réflexion lumineuse extérieure, de préférence en cantonnant cette réflexion lumineuse à une valeur inférieure à 20%.

Accessoirement, l'invention a aussi pour but que ce contrôle du niveau de transmission lumineuse s'obtienne de façon relativement simple et soit souple de mise en oeuvre à l'échelle industrielle.

L'invention a tout d'abord pour objet un vitrage comprenant au moins un substrat transparent muni d'un empilement de couches minces selon la revendication 1. Cet empilement compte une alternance de n couche(s) fonctionnelle(s) à propriétés de réflexion dans l'infrarouge et/ou le rayonnement solaire et de n + 1 revêtements composés d'une ou plusieurs couches en matériau diélectrique, de manière à ce que chaque couche fonctionnelle soit disposée entre deux revêtements. En outre, au moins une couche absorbante dans le visible est insérée entre deux couches de matériau diélectrique d'au moins un desdits revêtements. Dans cette configuration, la couche absorbante n'est ni en contact direct avec le verre (ce qui limite les problèmes de diffusion d'oxygène et d'alcalin sous l'effet de la chaleur), ni en contact direct avec l'argent (ce qui limite les problèmes de détérioration de la couche d'argent induite par l'oxydation de la couche absorbante à son contact, également sous l'effet de la chaleur).

Selon une première variante, l'empilement comporte une seule couche fonctionnelle disposée entre deux revêtements (cas où n = 1).

Selon une seconde variante, l'empilement comporte deux couches fonctionnelles alternées avec trois revêtements (cas où n = 2).

Avantageusement la ou les couches fonctionnelles sont à base d'argent ou en alliage métallique contenant de l'argent.

La couche absorbante (ou les couches absorbantes, l'invention n'étant pas limitée à l'insertion d'une unique couche absorbante) peut être choisie en différents matériaux : il peut s'agir d'un métal ou d'un alliage métallique du type Ti, Nb, Zr ou NiCr. Il peut aussi s'agir d'un oxyde métallique, comme l'oxyde de chrome, l'oxyde de fer ou un oxyde sous-stoechiométrique de titane ou de zinc. Il peut enfin s'agir d'un nitrure métallique, comme le nitrure de niobium, de zirconium, de chrome ou de NiCr.

De préférence, l'épaisseur de la couche absorbante dans le visible selon l'invention est cantonnée à de faibles valeurs : son épaisseur est avantageusement inférieure ou égale à 7 nm, et même plutôt inférieure à 5 ou 3 nm. Usuellement, on choisit une épaisseur comprise entre 1 et 3 nm : la première caractéristique de la couche absorbante, mentionnée plus haut, est son absence de contact direct avec le verre ou avec la couche d'argent. Sa seconde caractéristique est sa minceur : très fine, elle ne sert pas à abaisser massivement la transmission, mais plutôt à l'ajuster précisément de quelques pour cents.

La couche absorbante dans le visible se trouve entre deux couches de diélectriques à base d'un nitrure de silicium et/ou d'aluminium.

Dans une réalisation, elle se trouve entre deux couches de l'un de ces nitrures. Il s'agit en effet là de la configuration optimale pour " encapsuler " au mieux la couche absorbante, pour l'isoler des interactions avec des espèces risquant de l'oxyder ou de la dégrader (oxygène de l'air ou du verre, ou de la couche d'oxyde adjacente, espèces diffusant de la couche d'argent sous l'effet de la chaleur...). En effet, les nitrures de silicium et/ou d'aluminium sont connus pour leur grande inertie chimique, même à haute température. Non seulement ils jouent leur rôle habituel de diélectrique à fonction optique et à fonction de protection des couches d'argent (avec un indice de réfraction de l'ordre de 2), mais en plus ils vont jouer vis-à-vis de la couche absorbante dans le visible le rôle de couches-écran.

Dans cette configuration, un traitement thermique du type recuit, bombage ou trempe ne va pas (ou très peu) affecter la couche absorbante, les couches de nitrure faisant barrière à l'oxygène et l'empêchant de s'oxyder. En conséquence, il ne va pas y avoir de variation de transmission lumineuse de l'empilement dans son ensemble plus sensible que celle que l'on observe pour l'empilement en l'absence de couche absorbante (par exemple une modification d'au plus 3%).

Au moins un des revêtements de l'empilement selon l'invention comprend au moins une couche d'oxyde choisi parmi l'un au moins des oxydes suivants : oxyde de zinc, oxyde d'étain, oxyde de titane, oxyde de silicium, oxyde de tantale, oxyde de niobium, oxyde de zirconium. Comme cela est exposé dans le brevet EP-0 847 965 précité, il est en effet intéressant que les revêtements comprennent à la fois des couches d'oxyde métallique et des couches de nitrure de silicium ou d'aluminium.

Ainsi, sous au moins une des couches fonctionnelles, il est avantageux d'avoir une couche à base d'oxyde de zinc, qui tend à faciliter l'adhésion et la cristallisation de la couche fonctionnelle à base d'argent et à augmenter ainsi sa qualité et sa stabilité à haute température.

Il est également avantageux que la ou au moins une des couches fonctionnelles soit en dessous d'une couche à base d'oxyde de zinc, pour en augmenter l'adhésion.

Pour assurer que l'empilement puisse subir sans évolution optique trop significative des traitements thermiques du type recuit, trempe ou bombage, il est préférable que chacun des revêtements comprenne au moins une couche en nitrure de silicium et/ou d'aluminium.

Optionnellement, une fine couche de métal ou d'oxyde métallique sous-stoechiométrique (éventuellement nitrurée) peut être insérée entre chaque couche fonctionnelle et le revêtement disposé au dessus d'elle et/ou le revêtement disposé en dessous d'elle. Il peut s'agir de couches en titane, niobium, alliage nickel-chrome, qui sont éventuellement partiellement oxydées pendant le dépôt de l'empilement (quand la couche suivante est déposée par pulvérisation cathodique réactive en présence d'oxygène). On les désigne usuellement sous le nom de couches d'accrochage (pour la couche en dessous) ou de couche sacrificielle ou de couche " blocker " (pour la couche en dessus).

Selon une variante préférée, l'empilement comprend deux couches fonctionnelles à base d'argent avec trois revêtements, et la couche absorbante dans le visible se trouve insérée dans le revêtement dit " intermédiaire ", c'est-à-dire celui disposé entre les deux couches fonctionnelles. Il est apparu que c'est dans cette configuration que la couche absorbante parait la plus stabilisée/isolée, et que l'aspect en réflexion extérieure du vitrage est le meilleur. Un exemple d'empilement selon l'invention est le suivant :
Substrat transparent/Si₃N₄/ZnO/Ag/ZnO/Si₃N₄/NbN/Si₃N₄/ZnO/Ag/ZnO/Si₃N₄
avec éventuellement de fines couches de métal (éventuellement oxydé partiellement) du type titane sur une des faces au moins des couches d'argent.

L'invention concerne tous les vitrages munis de ces empilements ; les vitrages feuilletés (où l'empilement est déposé sur un des substrats rigides ou sur un substrat flexible du type polyétylènetéréphtalate PET que l'on vient assembler avec les deux substrats rigides par des feuilles thermoplastiques), les vitrages feuilletés dits asymétriques, les vitrages multiples du type double-vitrage avec de préférence l'empilement en face 2 ou en face 3 du vitrage (en numérotant les faces des substrats, de façon conventionnelle, de la face la plus extérieure à la face intérieure du vitrage une fois monté dans un local). L'invention concerne plus particulièrement les double-vitrages qui présentent :
Σ des transmissions lumineuses T_{L} d'au plus 75%, notamment d'au plus 70% ou 65%, notamment d'au moins 40%, ou comprises entre 55 et 65% ou entre 45 et 55%, notamment aux environs de 50% et 60%,
Σ et/ou une réflexion lumineuse extérieure R_{L} inférieure ou égale à 20%, notamment d'au plus 17%,
Σ et/ou des valeurs de a* et de b* en réflexion lumineuse extérieure inférieures ou égales à 1, de préférence négatives (même après avoir subi des traitements thermiques du type trempe), plus particulièrement dans le cas d'empilements à deux couches d'argent.

Le point-clé de l'invention est donc que la couche absorbante dans le visible insérée d'une façon particulière dans des empilements conventionnels permet d'en régler la transmission lumineuse sans évoluer optiquement en cas de traitement thermique et/ou sans perturbation de l'aspect en réflexion du substrat.

Avantageusement, la(les) couche(s) absorbante(s) selon l'invention a (ont) une absorption lumineuse intrinsèque d'au moins 3%, notamment comprise entre 4 et 15% ou entre 6 et 12% (chacune ou l'ensemble desdites couches absorbantes si l'invention en utilise plusieurs).

L'invention sera décrite plus en détails à l'aide des exemples suivants.

Dans tous les exemples, les empilements sont déposés sur un substrat en verre clair silico-sodo-calcique de 6 mm. Le substrat est ensuite monté en double- vitrage avec un second substrat de verre identique, de façon à ce que l'empilement soit en face 2 et à ce que la lame de gaz intercalaire entre les 2 verres soit en argon et de 12 mm d'épaisseur. Ces vitrages sont essentiellement destinés à l'habitation, en tant que vitrages d'isolation thermique/de contrôle solaire).

Dans tous les exemples, on fait un premier montage en double-vitrage avec le verre muni de couches non trempées, puis un second montage où le verre une fois muni de l'empilement de couches a subi une trempe dans les conditions usuelles dans le domaine (comprenant un chauffage du verre à 640°C pendant plusieurs minutes).

Toutes les couches des empilements sont déposées par pulvérisation cathodique assistée par champ magnétique : (des couches d'oxyde par pulvérisation cathodique réactive en présence d'oxygène de cibles métalliques ou de cibles céramiques éventuellement sous-stoechiométrique, les couches de nitrure par pulvérisation cathodique réactive en présence d'azote).

### Exemple comparatif 1

L'empilement de couches est le suivant : (le tableau ci-dessous indique les épaisseurs des couches en nanomètres)

| | **Ex. comparatif 1** |
|---|---|
| Verre | nm |
| Si₃N₄ | 31 |
| ZnO | 10 |
| Ag | 9,5 |
| Ti | 0,8 |
| ZnO | 10 |
| Si₃N₄ | 64 |
| ZnO | 10 |
| Ag | 17,5 |
| Ti | 0,8 |
| ZnO | 10 |
| Si₃N₄ | 21,5 |

Il est comparatif, puisqu'il n'a pas de couche absorbante dans le visible entre deux couches de diélectrique. Les deux couches de titane au-dessus des couches d'argent sont très fines et vont s'oxyder (au moins partiellement) pendant le dépôt de la couche suivante en ZnO (tout comme dans les exemples suivants).

### Exemples 2 et 3 (hors l'invention)

Les exemples reprennent l'empilement de l'exemple 1, en ajoutant une couche de nitrure de titane " au milieu " de la couche de Si₃N₄ du revêtement diélectrique se trouvant entre les deux couches d'argent. La couche absorbante est protégée de l'oxydation par les deux couches qui l'entourent.

Le tableau ci-dessous regroupe les épaisseurs en nm de chacune des couches.

| | **Exemple 2** | **Exemple 3** |
|---|---|---|
| Verre | - | - |
| Si₃N₄ | 31 | 31 |
| ZnO | 10 | 10 |
| Ag | 9,5 | 9,5 |
| Ti | 0,8 | 0,8 |
| ZnO | 10 | 10 |
| Si₃N₄ | 32 | 32 |
| TiN | 0,7 | 1,4 |
| Si₃N₄ | 32 | 32 |
| ZnO | 10 | 10 |
| ZnO | 10 | 10 |
| Ag | 17, 5 | 17,5 |
| Ti | 0,8 | 0,8 |
| ZnO | 10 | 10 |
| Si₃N₄ | 21,5 | 21,5 |

Le tableau ci-dessous récapitule pour chacun des exemples 1 à 3 les données suivantes :
↪ la transmission T_{L} en % selon l'Illuminant D65 ;
↪ La longueur d'onde dominante λ_{D} en transmission, en nm ;
↪ la valeur de réflexion lumineuse extérieure Rlext en % ;
↪ la valeur de a* et b* en réflexion lumineuse selon le système de calorimétrie (L, a*, b*) ;
   ↪ le facteur solaire FS, selon une norme DIN

Ces valeurs sont données pour le double-vitrage sans trempe du verre à couches (" sans trempe ") et pour le double-vitrage avec le verre à couches trempées (" avec trempe ").

| **Exemples** | **T_{L}** | **λ_{D}** | **Rlext** | **a*** | **b*** | **FS** |
|---|---|---|---|---|---|---|
| **Exemple 1 comparatif** | | | | | | |
| sans trempe | 63,4 | 516 | 17,1 | -4,4 | -3,5 | 34 |
| avec trempe | 65,3 | 508 | 21,1 | -3,8 | -4,7 | 34 |

| **Exemple 2** | | | | | | |
|---|---|---|---|---|---|---|
| sans trempe | 60,2 | 496 | 16,4 | -3,9 | 0,7 | 33 |
| avec trempe | 62,3 | 493 | 17,4 | -0,6 | -2,5 | 33 |

| **Exemple 3** | | | | | | |
|---|---|---|---|---|---|---|
| sans trempe | 57,6 | 501 | 13,4 | -4,6 | -5,0 | 31 |
| avec trempe | 59,5 | 497 | 14,5 | -2,7 | -7,8 | 31 |

De ces données peuvent être tirées les conclusions suivantes :
➢ Avec la couche additionnelle de TiN hors invention, on peut abaisser de façon contrôlée la T_{L} de 2 à 7 ou 8%,en ajustant en conséquence son épaisseur, tout en conservant un niveau de réflexion extérieure modéré, nettement inférieur à 20% (on pourrait obtenir la même diminution de T_{L} en épaississant les couches d'argent, mais au détriment de la réflexion lumineuse extérieure, qui augmente alors significativement).
➢ Cet ajustement peut se faire avec une couche très mince : moins de 2 nm de TIN, donc sans ralentir significativement le temps de cycle de production de l'empilement, sans en augmenter significativement le coût ni la complexité.
➢ L'ajout de cette couche absorbante a aussi comme conséquence directe un gain d'au moins 1 à 3 points de FS.
➢ Même sans trempe, la couché absorbante selon l'invention a un effet bénéfique sur la réflexion extérieure, en l'abaissant d'au moins 1 à 4% (à niveaux de T_{L} comparables), et elle permet de conserver des valeurs de a* et b* négatifs (c'est-à-dire une couleur résiduelle en réflexion dans les bleu-verts, qui est la teinte la plus recherchée actuellement).
➢ Tous ces avantages sont conservés même quand l'empilement subit une trempe : bien sûr, il y a de légères variations de T_{L} ou de R_{L}, mais la réflexion lumineuse reste bien en dessous de 20% (contrairement à l'exemple comparatif où elle augmente de près de 4% et franchit le seuil de 20%). C'est une preuve que la couche de TiN est stable, n'a pas (peu) évolué optiquement grâce à son « encapsulation » entre deux nitrures.

A noter aussi qu'il peut être préférable que les deux couches de nitrure qui entourent la couche de TiN ne soient pas de même épaisseur, la plus éloignée du substrat pouvant être plus épaisse de par exemple un tiers (d'environ 20, 30 ou 40%) par rapport à l'autre (ou réciproquement).

A noter par ailleurs que l'on peut remplacer la couche de TiN par une couche de NbN ou par une couche de métal du type Ti, Nb ou Zr.

A noter enfin la forte dissymétrie dans les épaisseurs des deux couches d'argent, qui suit notamment l'enseignement du brevet EP-0 844 219 précité.

### Exemple 4 selon l'invention et exemples 5 et 5bis hors invention

Ces exemples sont proches de l'exemple 3, avec des couches de NbN (exemple 4) et de TiN (exemple 5) en tant que couches absorbantes.

Le tableau ci-dessous regroupe les épaisseurs en nm de chacune des couches de l'empilement :

| | **Exemple 4** | **Exemple 5** | **Exemple 5 bis** |
|---|---|---|---|
| Verre | - | - | - |
| Si₃N₄ | 31 | 31 | 29 |
| ZnO | 10 | 10 | 10 |
| Ag | 8, 5 | 8, 5 | 8,5 |
| Ti | 0,8 | 0,8 | 0,8 |
| ZnO | 10 | 10 | 10 |
| Si₃N₄ | 31 | 31 | 30 |
| Couche absorbante | NbN : 1,4 | TiN : 1,4 | TiN : 2 |
| Si₃N₄ | 31 | 31 | 30 |
| ZnO | 10 | 10 | 10 |
| Ag | 17,0 | 17,0 | 20,2 |
| Ti | 0,8 | 0,8 | 0,8 |
| ZnO | 10 | 10 | 10 |
| Si₃N₄ | 23 | 23 | 20 |

A noter que les exemples 2 à 5 bis présentent après trempe une bonne qualité optique, sans apparition de piqûres de corrosion ou de petits défauts de mouillage notamment.

Le tableau ci-dessous récapitule pour ces trois exemples les mêmes données photométriques que pour les exemples précédents 1 à 3, avec les mêmes conventions, et en plus :
➢ la pureté en transmission pe en pourcentage,
➢ la valeur de ΔE en réflexion, sans unité, qui, dans le système de colorimétrie (L, a*, b*) est calculée selon la formule [(a*f - a*i)² + (b*f - b*i)² + (L*f - L*i)]^{1/2} avec a*i, b*i et L*i les valeurs avant trempe, et a*f, b*f et L*f les valeurs après trempe.

| **Exemples** | **T_{L}** | **λ_{D}** | **pe** | **Rlₑₓₜ** | **a*** | **b*** | **ΔE** | **FS** |
|---|---|---|---|---|---|---|---|---|
| **Exemple 4** | | | | | | | | |
| avant trempe | 58,5 | 537 | 3,4 | 14,2 | -1,0 | -7,8 | - | 32 |
| après trempe | 59,6 | 521 | 2,2 | 15,7 | -2,7 | -9,0 | 2,9 | 33 |

| **Exemple 5** | | | | | | | | |
|---|---|---|---|---|---|---|---|---|
| avant trempe | 58,6 | 542 | 4,6 | 14,4 | -0,7 | -9,0 | - | 32 |
| après trempe | 60,4 | 531 | 2,8 | 16,0 | -2,1 | -10,1 | 2,7 | 33 |

| **Exemple 5bis** | | | | | | | | |
|---|---|---|---|---|---|---|---|---|
| avant trempe | 49,4 | 500 | 6,4 | 16,2 | -1,9 | -5,3 | - | 26 |
| après trempe | 50,6 | 494 | 2,8 | 17,9 | -1,6 | -6,2 | - | 26 |

On remarque que l'augmentation de transmission lumineuse après trempe est très limitée : environ 1,5% avec la couche de NbN, environ 2 ou 1,2% avec une couche de TiN suivant son épaisseur. Là-encore, la couleur en réflexion extérieure évolue peu après trempe : les valeurs de a* et b* restent négatives, avec une diminution de la valeur de a* d'environ -2 et une variation de la valeur de b* de ± 1. L'exemple 5bis est particulièrement bon sur ce point, avec une valeur de a* qui n'évolue que de +0,3 et une valeur de b* qui n'évolue que de - 0,9.

### Exemple 6

Cet exemple n'est pas conforme à l'invention : la couche absorbante se trouve dans le revêtement diélectrique supérieur (au-dessus de la seconde couche d'argent), entre une couche d'oxyde et une couche de nitrure.

Le tableau ci-dessous regroupe les épaisseurs en nm de chacune des couches de l'empilement :

| | **Ex. 6** |
|---|---|
| Verre | nm |
| Si₃N₄ | 31 |
| ZnO | 10 |
| Ag | 8,5 |
| Ti | 0,8 |
| ZnO | 10 |
| Si₃N₄ | 62 |
| ZnO | 10 |
| Ag | 17,0 |
| Ti | 0,8 |
| ZnO | 10 |
| TiN | 1,4 |
| Si₃N₄ | 23 |

On a monté le verre comme précédemment en double vitrage, sans puis après trempe. L'évolution optique après trempe est la suivante :
- ΔT_{L} = T_{L} après trempe - T_{L} avant trempe = +2,4%,
- Δb* en réflexion extérieure = b* après trempe - b* avant trempe = 2,
- R_{L EXT} après trempe = 16,5%,
- rapport T_{L}/FS = environ 62-63/33.

Il n'y a pas de piqûre de corrosion, même si les paramètres de dépôt ne sont pas parfaitement ajustés, et les défauts de démouillage sont très petits et très peu nombreux.

Plusieurs configurations où la couche absorbante se trouve entre une couche d'oxyde et une couche de nitrure ont été testées en évaluant la qualité optique des empilements après trempe. Ce sont les variantes de l'exemple 6 détaillées ci-dessous (les épaisseurs de toutes les couches sauf celle de la couche absorbante sont les mêmes que celles selon l'exemple 6):

### Exemple 6.1 (hors invention)

Substrat/Si₃N₄/ZnO/Ag/Ti/ZnO/ TiN(1 à 3 nm)/Si₃N₄/ZnO/Ag/Ti/ZnO/Si₃N₄

### Exemple 6.2 (hors invention)

Substrat/Si₃N₄/ZnO/Ag/Ti/ZnO/Si₃N₄/TiN (1 à 3 nm)/ZnO/Ag/Ti/ZnO/Si₃N₄

### Exemple 6.3 (hors invention)

Substrat/Si₃N₄/ZnO/Ag/Ti/ZnO/Si₃N₄/ZnO/Ag/Ti/ZnO/TiN (1 à 3 nm)/Si₃N₄

### Exemple 6.4 (hors invention)

Substrat/Si₃N₄/ZnO/Ag/Ti/ZnO/TiN(1 à 2 nm)/Si₃N₄/ZnO/Ag/Ti/ZnO/TiN (1 à 2nm)/Si₃N₄

Cet exemple utilise donc deux couches absorbantes.

La qualité optique après trempe de ces verres a été évaluée par la densité des défauts de moins de 2 micromètres et par la densité des défauts d'au moins 2 micromètres. Les configurations les plus favorables sont celles de l'exemple 6.3 et celles de l'exemple 6.4 :
pour l'exemple 6.3, avec 2 nm et 3 nm de couche absorbante, il n'y a aucun défaut de plus ou de moins de 2 microns.
pour l'exemple 6.4, il y a des défauts peu nombreux quand les deux couches absorbantes ont chacune une épaisseur de 1 nm, et aucun défaut si la première en partant du substrat a une épaisseur de 1 nm et la seconde une épaisseur de 2 nm. (la configuration selon l'exemple 6.3 peut être considérée comme meilleure que celle de l'exemple 6.4, puisque l'on évite tout défaut avec 2 nm dans un cas, et 2+1 nm au moins dans l'autre cas).

↪ pour l'exemple 6.2, la configuration optimale est observée avec 3 nm de couche absorbante (peu de défauts)
↪pour l'exemple 6.1, la configuration optimale est observée avec 3 nm de couche absorbante également (aucun défaut de moins de 2 micromètres, peu de défauts d'au moins 2 micromètres)
↪ par comparaison, si on reproduit l'exemple 6.1 en omettant la couche absorbante, on a après trempe une forte densité à la fois de défauts de moins de 2 micromètres et de défauts d'au moins 2 micromètres, densité rédhibitoire pour un produit commercial.

On voit donc que deux paramètres sont à prendre en compte pour assurer une bonne qualité optique après trempe des empilements selon l'invention : la place de la ou des couches absorbantes dans l'empilement (de préférence "dans" le diélectrique le plus extérieur ou dans le diélectrique intermédiaire des empilements à deux couches d'argent), et sa ou leurs épaisseurs (variable suivant les configurations, mais de préférence d'au moins 1,5 ou 2 nm, et même plutôt aux environs de 3 nm quand la couche absorbante est "dans" le diélectrique intermédiaire).

On voit aussi que la présence de la couche absorbante améliore le comportement aux traitements thermiques de l'empilement dans son ensemble.

### Exemple 7 comparatif

Cet exemple est donné à titre de comparaison, dans la mesure où cette fois la couche absorbante est au contact direct du verre :

| | **Ex. comparatif. 7** |
|---|---|
| Verre | nm |
| TiN | 1,4 |
| Si₃N₄ | 31 |
| ZnO | 10 |
| Ag | 8,5 |
| Ti | 0,8 |
| ZnO | 10 |
| Si₃N₄ | 62 |
| ZnO | 10 |
| Ag | 17,8 |
| Ti | 0,8 |
| ZnO | 10 |
| Si₃N₄ | 23 |

On monte toujours de la même façon le verre en double-vitrage, sans puis après trempe : ΔT_{L} = +4%, Δb* en réflexion extérieure = -2 à -3, qualité optique très mauvaise : énormément de piqûres de corrosion.

Cet exemple démontre que placer la couche directement au contact du verre a un impact désastreux sur la qualité optique du verre après trempe, avec une augmentation de T_{L} significative.

En conclusion, l'insertion d'une couche absorbante selon l'invention dans le visible (et au-delà) entre des diélectriques de type nitrure permet un contrôle fin de la transmission lumineuse, un gain de FS, sans les perturbations optiques qu'on aurait pu craindre, tout particulièrement en réflexion extérieure et tout particulièrement quand les couches subissent un traitement thermique : évolution optique globale de l'empilement limitée en cas de trempe (moins de +/-3% ou même +/-2% en T_{L}), maintien d'un niveau de réflexion extérieure modérée et d'une colorimétrie satisfaisante en réflexion extérieure, qualité optique après trempe satisfaisante.

Les vitrages comportant un substrat muni de l'empilement selon l'invention peuvent aussi comprendre une ou plusieurs autres fonctionnalités : ils peuvent comporter, par exemple, un revêtement anti-salissures à base de TiO₂ photocatalytique, un revêtement hydrophobe à base de polymère fluoré, un revêtement hydrophile à base de SiO₂ ou SiOC, un ou plusieurs revêtements antireflets. Ces revêtements sont de préférence disposés sur une au moins des faces extérieures des vitrages (les faces tournées vers l'extérieur, par opposition aux faces tournées vers la feuille thermoplastique intérieure dans le cas d'un feuilleté ou aux faces tournées vers la lame d'air, de gaz ou de vide dans le cas d'un vitrage isolant).

L'empilement selon l'invention peut aussi être chauffant, avec l'alimentation électrique et la connectique appropriée.

## Revendications

1. Vitrage comprenant au moins un substrat transparent muni d'un empilement de couches minces comportant une alternance de n couche(s) fonctionnelle(s) à propriétés de réflexion dans l'infrarouge et/ou dans le rayonnement solaire et de n+1 revêtements composés d'une ou plusieurs couches en matériau diélectrique, de manière à ce que chaque couche fonctionnelle soit disposée entre deux revêtements, au moins un revêtement comportant au moins deux couches en matériau diélectrique, au moins une couche absorbante dans le visible étant insérée entre deux couches de matériau diélectrique dudit revêtement, ***caractérisé en ce que*** la (les) couche(s) absorbante(s) dans le visible est (sont) insérée(s) entre deux couches à base de nitrure d'aluminium et/ou de silicium
et ***en ce que*** la(les) couche(s) absorbante(s) dans le visible est (sont) choisie(s) parmi :
- Ti, Nb, Zr ou NiCr,
- l'oxyde de chrome, l'oxyde de fer ou
- un oxyde sous-stoechiométrique de titane ou de zinc, ou
- le nitrure de niobium, de zirconium, de chrome ou de NiCr.

2. Vitrage selon la revendication 1, ***caractérisé en ce que*** l'empilement comporte une seule couche fonctionnelle disposée entre deux revêtements.

3. Vitrage selon la revendication 1, ***caractérisé en ce que*** l'empilement comprend deux couches fonctionnelles alternées avec trois revêtements.

4. Vitrage selon l'une des revendications précédentes, ***caractérisé en ce que*** la (les) couche(s) fonctionnelle(s) est(sont) en argent ou en alliage métallique contenant de l'argent.

5. Vitrage selon l'une des revendications précédentes, ***caractérisé en ce que*** l'épaisseur de la (chacune des) couche(s) absorbante(s) dans le visible est inférieure ou égale à 7 nm, notamment inférieure ou égale à 5 nm ou à 3 nm, de préférence comprise entre 1 et 2 nm.

6. Vitrage selon l'une des revendications précédentes, ***caractérisé en ce qu***'au moins un des revêtements comprend une couche d'oxyde choisi parmi l'oxyde de zinc, d'étain, de titane, de silicium, de tantale, de niobium, de zirconium, ou un mélange d'au moins deux d'entre eux.

7. Vitrage selon l'une des revendications précédentes ***caractérisé en ce que*** la ou chacune des couche(s) fonctionnelle(s) est au dessus d'un revêtement dont la dernière couche est à base d'oxyde de zinc.

8. Vitrage selon l'une des revendications précédentes, ***caractérisé en ce que*** la ou chacune des couche(s) fonctionnelle(s) est en dessous d'un revêtement dont la première couche est à base d'oxyde zinc.

9. Vitrage selon l'une des revendications précédentes, ***caractérisé en ce que*** chacun des revêtements comprend au moins une couche à base de nitrure de silicium et/ou d'aluminium.

10. Vitrage selon l'une des revendications précédentes, ***caractérisé en ce qu***'une fine couche d'un métal ou d'un sous-oxyde métallique est insérée entre chaque couche fonctionnelle et l'un au moins des revêtements qui l'entourent, notamment une couche sacrificielle à base de titane, niobium, nickel-chrome et de préférence d'épaisseur inférieure à 2 nm.

11. Vitrage selon l'une des revendications précédentes, ***caractérisé en ce que*** l'empilement comporte deux couches fonctionnelles à base d'argent entre trois revêtements, avec la (les) couche(s) absorbante(s) dans le visible insérée(s) dans le revêtement " intermédiaire " disposé entre les deux couches fonctionnelles et/ou dans le revêtement « supérieur » disposé au-dessus de la seconde couche fonctionnelle.

12. Vitrage selon l'une des revendications précédentes, ***caractérisé en ce que*** l'empilement est le suivant :
Si₃N₄/ZnO/Ag/ZnO/Si₃N₄/NbN/Si₃N₄/ZnO/Ag/ZnO/Si₃N₄
avec éventuellement de fines couches de métal partiellement ou totalement oxydées disposées sur l'une des faces au moins de chacune des couches d'argent.

13. Vitrage selon l'une des revendications précédantes, *caractérisé en qu*'il est sous forme de vitrage feuilleté, de vitrage asymétrique ou d'un vitrage multiple du type double vitrage.

14. Vitrage selon l'une des revendications précédentes, **caractérisé en ce que** la(les) couche(s) absorbante(s) a (ont) une absorption lumineuse intrinsèque d'au moins 3%, notamment comprise entre 4 et 15% ou entre 6 et 12%.

15. Double-vitrage selon l'une des revendications précédentes, ***caractérisé en ce que*** l'empilement comprend deux couches fonctionnelles à base d'argent, avec une transmission lumineuse T_{L} d'au plus 65%, notamment comprise entre 40 et 65%, une réflexion lumineuse extérieure R_{L} inférieure ou égale à 20%, notamment d'au plus 17%, et des valeurs de a* et b* en réflexion lumineuse extérieure inférieures ou égales à 1, de préférence négatives.

16. Vitrage selon l'une des revendications précédentes, ***caractérisé en ce que*** la (les) couche(s) absorbante(s) dans le visible et/ou l'empilement de couches dans son ensemble n'évolue(nt) pas ou peu optiquement en cas de traitement thermique du type recuit, bombage, tempe.

17. Vitrage selon l'une des revendications précédentes, ***caractérisé en ce qu'**il* est également muni d'au moins un autre revêtement de fonctionnalité différente, notamment un revêtement anti-salissures, un revêtement hydrophobe, un revêtement hydrophile, un revêtement antireflets.

## Patentansprüche

1. Verglasung mit mindestens einem transparenten Substrat, das mit einem Dünnschichtstapel ausgebildet ist, der eine abwechselnde Folge von n funktioneller (funktionellen) Schicht(en) mit Reflexionseigenschaften im Infrarot und/oder im Sonnenlicht und n + 1 Beschichtungen, die sich aus einer oder mehreren Schichten aus einem dielektrischen Material zusammensetzen, aufweist, derart, dass jede funktionelle Schicht zwischen zwei Beschichtungen angeordnet ist und wenigstens eine Beschichtung mindestens zwei Schichten aus dielektrischem Material umfasst, wobei mindestens eine im sichtbaren Bereich absorbierende Schicht zwischen zwei Schichten aus dielektrischem Material der Beschichtung eingebaut ist, **dadurch gekennzeichnet, dass** die im sichtbaren Bereich absorbierende(n) Schicht(en) zwischen zwei Schichten auf Basis von Aluminium- und/oder Siliciumnitrid eingebaut ist (sind),
**und dadurch, dass** die im sichtbaren Bereich absorbierende(n) Schicht(en) ausgewählt ist (sind) aus:
- Ti, Nb, Zr oder NiCr,
- Chromoxid, Eisenoxid oder
- einem unterstöchiometrischen Titan- oder Zinkoxid oder
- Niob-, Zirconium-, Chrom- oder NiCr-Nitrid.

2. Verglasung nach Anspruch 1, **dadurch gekennzeichnet, dass** der Stapel eine einzige funktionelle Schicht umfasst, die zwischen zwei Beschichtungen angeordnet ist.

3. Verglasung nach Anspruch 1, **dadurch gekennzeichnet, dass** der Stapel zwei sich mit drei Beschichtungen abwechselnde funktionelle Schichten umfasst.

4. Verglasung nach einem der vorhergehenden Ansprüche, **dadurch gekennzeichnet, dass** die funktionelle(n) Schicht(en) aus Silber oder einer Silber enthaltenden Metalllegierung besteht (bestehen).

5. Verglasung nach einem der vorhergehenden Ansprüche, **dadurch gekennzeichnet, dass** die Dicke der (jeder der) im sichtbaren Bereich absorbierenden Schicht(en) weniger als oder gleich 7 nm, insbesondere weniger als oder gleich 5 nm oder 3 nm, und vorzugsweise 1 bis 2 nm beträgt.

6. Verglasung nach einem der vorhergehenden Ansprüche, **dadurch gekennzeichnet, dass** mindestens eine der Beschichtungen eine Oxidschicht umfasst, die aus Zink-, Zinn-, Titan-, Silicium-, Tantal-, Niob- und Zirconiumoxid oder einem Gemisch aus mindestens zwei davon ausgewählt ist.

7. Verglasung nach einem der vorhergehenden Ansprüche, **dadurch gekennzeichnet, dass** die oder jede der funktionelle(n) Schicht(en) sich auf einer Beschichtung befindet, deren letzte Schicht auf der Basis von Zinkoxid ist.

8. Verglasung nach einem der vorhergehenden Ansprüche, **dadurch gekennzeichnet, dass** die oder jede der funktionelle(n) Schicht(en) sich unter einer Beschichtung befindet, deren erste Schicht auf der Basis von Zinkoxid ist.

9. Verglasung nach einem der vorhergehenden Ansprüche, **dadurch gekennzeichnet, dass** jede der Beschichtungen mindestens eine Schicht auf der Basis von Silicium- und/oder Aluminiumnitrid umfasst.

10. Verglasung nach einem der vorhergehenden Ansprüche, **dadurch gekennzeichnet, dass** eine feine Schicht aus einem Metall oder Metallsuboxid zwischen jeder funktionellen Schicht und mindestens einer der sie umgebenden Beschichtungen, insbesondere eine Opferschicht auf der Basis von Titan, Niob und Nickelchrom, und vorzugsweise mit einer Dicke von kleiner als 2 nm, eingebaut ist.

11. Verglasung nach einem der vorhergehenden Ansprüche, **dadurch gekennzeichnet, dass** der Stapel zwei funktionelle Schichten auf der Basis von Silber zwischen drei Beschichtungen umfasst, wobei die im sichtbaren Bereich absorbierende(n) Schicht(en) in die "Zwischenbeschichtung", die zwischen den zwei funktionellen Schichten angeordnet ist, und/oder in die "obere" Beschichtung, die auf der zweiten funktionellen Schicht angeordnet ist, eingebaut ist (sind).

12. Verglasung nach einem der vorhergehenden Ansprüche, **dadurch gekennzeichnet, dass** der Stapel wie folgt gebildet ist:
Si₃N₄/ZnO/Ag/ZnO/Si₃N₄/NbN/Si₃N₄/ZnO/Ag/ZnO/Si₃N₄
mit gegebenenfalls feinen Metallschichten, die teilweise oder vollständig oxidiert und auf einer der Seiten mindestens jeder der Silberschichten angeordnet sind.

13. Verglasung nach einem der vorhergehenden Ansprüche, **dadurch gekennzeichnet, dass** sie in Form einer Verbundglasscheibe, einer asymmetrischen Verglasung oder einer Mehrfachverglasung vom Typ einer Doppelverglasung vorliegt.

14. Verglasung nach einem der vorhergehenden Ansprüche, **dadurch gekennzeichnet, dass** die absorbierende(n) Schicht(en) einen eigenen Lichtabsorptionsgrad von mindestens 3 %, insbesondere im Bereich zwischen 4 bis 15 %, oder zwischen 6 und 12 % besitzt (besitzen).

15. Doppelverglasung nach einem der vorhergehenden Ansprüche, **dadurch gekennzeichnet, dass** der Stapel zwei funktionelle Schichten auf der Basis von Silber mit einem Lichttransmissionsgrad, T_{L}, von höchstens 65 %, insbesondere im Bereich zwischen 40 bis 65 %, einem äußeren Lichtreflexionsgrad, R_{L}, von weniger als oder gleich 20 %, insbesondere höchstens 17 %, und Werten von a* und b* bei äußerer Lichtreflexion von weniger als oder gleich 1 und vorzugsweise negativ umfasst.

16. Verglasung nach einem der vorhergehenden Ansprüche, **dadurch gekennzeichnet, dass** die im sichtbaren Bereich absorbierende(n) Schicht(en) und/oder der Schichtaufbau in seiner Gesamtheit sich bei einer Wärmebehandlung vom Typ Tempern, Biegen und Vorspannen nicht oder nur wenig optisch verändert (verändern).

17. Verglasung nach einem der vorhergehenden Ansprüche, **dadurch gekennzeichnet, dass** sie außerdem mit mindestens einer weiteren Beschichtung mit einer anderen Funktionalität, insbesondere mit einer schmutzabweisenden Beschichtung, einer hydrophoben Beschichtung, einer hydrophilen Beschichtung bzw. einer Antireflexbeschichtung, versehen ist.

## Claims

1. Glazing comprising at least one transparent substrate provided with a stack of thin layers comprising an alternation of n functional layers having reflection properties in the infrared and/or the solar radiation range and of n + 1 coatings composed of one or more layers made of a dielectric, so that each functional layer is placed between two coatings, at least one coating comprising at least two layers in dielectric material, at least one layer absorbent in the visible is inserted between two layers of dielectric material of said coating, ***characterized in that*** the layer(s) absorbent in the visible is (are) inserted between two layers based on aluminium nitride and/or a silicon nitride
***and in that*** the layer(s) absorbent in the visible is (are) chosen among:
- Ti, Nb, Zr or NiCr,
- chomium oxide, iron oxide or
- a substoichiometric titanium oxide or zinc oxide, or
- niobium nitride, zirconium nitride, chromium nitride or NiCr nitride.

2. Glazing according to Claim 1, ***characterized in that*** the stack comprises a single functional layer placed between two coatings.

3. Glazing according to Claim 1, ***characterized in that*** the stack comprises two functional layers alternating with three coatings.

4. Glazing according to one of the preceding claims, ***characterized in that*** the functional layer(s) is (are) made of silver or a metal alloy containing silver.

5. Glazing according to one of the preceding claims, ***characterized in that*** the thickness of the layer (or each of the layers) absorbent in the visible is (are) less than or equal to 7 nm, especially less than or equal to 5 nm or 3 nm, preferably between 1 and 2 nm.

6. Glazing according to one of the preceding claims, ***characterized in that*** at least one of the coatings comprises an oxide layer chosen from zinc oxide, tin oxide, titanium oxide, silicon oxide, tantalum oxide, niobium oxide, zirconium oxide or a mixture of at least two of them.

7. Glazing according to one of the preceding claims, ***characterized in that*** the functional layer or each of the functional layers is above a coating whose final layer is based on zinc oxide.

8. Glazing according to one of the preceding claims, ***characterized in that*** the functional layer or each of the functional layers is beneath a coating whose first layer is based on zinc oxide.

9. Glazing according to one of the preceding claims, ***characterized in that*** each of the coatings comprises at least one layer based on silicon nitride and/or aluminium nitride.

10. Glazing according to one of the preceding claims, ***characterized in that*** a thin layer of a metal or a metal suboxide is inserted between each functional layer and at least one of the coatings which surround it, especially a sacrificial layer based on titanium, niobium, or nickel-chromium, and preferably having a thickness of less than 2 nm.

11. Glazing according to one of the preceding claims, ***characterized in that*** the stack includes two silver-based functional layers between three coatings, with the layer(s) absorbent in the visible inserted into the "intermediate" coating placed between the two functional layers and/or within the "upper" coating placed above the second functional layer.

12. Glazing according to one of the preceding claims, ***characterized in that*** the stack is as follows:
Si₃N₄/ZnO/Ag/ZnO/Si₃N₄/ NbN/Si₃N₄/ZnO/Ag/ZnO/Si₃N₄ or
optionally with thin layers of partially or completely oxidized metal which are placed on at least one of the faces of each of the silver layers.

13. Glazing according to one of the preceding claims, ***characterized in that*** it is in the form of laminated glazing, asymmetrical glazing or multiple glazing of the double-glazing type.

14. Glazing according to one of the preceding claims, **characterized in that** the absorbent layer(s) has (have) an intrinsic light absorption of at least 3%, especially between 4 and 15% or between 6 and 12%.

15. Double glazing according to one of the preceding claims, ***characterized in that*** the stack includes two silver-based functional layers, with a light transmission T_{L} of at most 65%, especially between 40 and 65%, an external light reflection R_{L} of less than or equal to 20%, especially at most 17%, and a* and b* values in external light reflection of less than or equal to 1, preferably negative values.

16. Glazing according to one of the preceding claims, ***characterized in that*** the layer(s) absorbent in the visible and/or the multilayer stack in its entirety does (do) not change, or changes (change) little optically in the case of heat treatment of the annealing, bending or toughening type.

17. Glazing according to one of the preceding claims, ***characterized in that*** it is also provided with at least one other coating of different functionality, especially an anti-soiling coating, a hydrophobic coating, a hydrophilic coating or an anti-reflection coating.
